Europäisches Patentamt

European Patent Office

Office européen des brevets

(19)

(11) **EP 1 292 080 B1**

(12) **EUROPEAN PATENT SPECIFICATION**

(45) Date of publication and mention
of the grant of the patent:
**20.04.2005 Bulletin 2005/16**

(51) Int Cl.⁷: $H04L\ 27/26$

(21) Application number: **02102304.9**

(22) Date of filing: **04.09.2002**

(54) **Method and modem for generating multi-carrier training sequences based on its cyclic time-domain shift with respect to a reference sequence**

Verfahren und Vorrichtung zur Erzeugung von Trainingssequenzen für Mehrträgersysteme basierend auf einer zyklischen Verschiebung bezüglich einer Referenzsequenz

Procédé et dispositif pour la génération des séquences d'apprentissage dans des systèmes multiporteuses basée sur une décalage cyclique par rapport à une séquence de référence

(84) Designated Contracting States:
**DE FR GB**

(30) Priority: **06.09.2001 US 947735**

(43) Date of publication of application:
**12.03.2003 Bulletin 2003/11**

(73) Proprietor: **Texas Instruments Incorporated
Dallas, Texas 75251 (US)**

(72) Inventor: **Williams, Richard
San Diego, CA 92129 (US)**

(74) Representative: **Holt, Michael et al
Texas Instruments Ltd.,
EPD MS/13,
800 Pavilion Drive
Northampton Business Park,
Northampton NN4 7YL (GB)**

(56) References cited:
**EP-A- 0 939 527          EP-A- 1 061 705
WO-A-00/79712**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 292 080 B1

**Description**

FIELD OF THE INVENTION

This invention relates generally to data communications, and particularly to generating unextended multi-carrier symbols without requiring the use of a storage medium to store the unextended multi-carrier symbols.

BACKGROUND OF THE INVENTION

Many modern communications systems use advanced coding techniques to increase the number of bits that may be transmitted for a given amount of available bandwidth. For example, multi-carrier techniques such as discrete multi-tone (DMT) and orthogonal frequency division multiplexing (OFDM) use a plurality of carrier frequencies to transmit large amounts of data. OFDM, a multi-carrier coding technique used in the IEEE technical standard 802.11a for wireless local area networks (LANs), permits the transmission of as many as six coded bits per subcarrier frequency and as many as 288 coded bits per symbol and provides up to 54 Mbps of data transfer rate.

At a transmitting end of the communications system, a modem for a communications system using multi-carrier coding techniques, such as DMT and OFMD, encodes data symbols in the frequency domain and then uses an inverse Fourier Transform to convert the frequency domain symbol into its time domain representation for transmission purposes. At a receiving end of the communications system, another modem receives the time domain symbol and performs a Fourier Transform to return the time domain symbol back to its frequency domain representation, which permits recovery of the encoded data.

The frequency domain symbol consists of a set of points from individual signal constellations that are simultaneously presented to the inverse Fourier Transform. The inverse Fourier Transform effectively modulates each constellation point with a unique, but related, frequency and then sums the resulting time domain waveforms to form a single time domain waveform that contains the original information. The inverse Fourier Transform has a fundamental frequency, and each unique frequency is an integer multiple of this fundamental frequency. Similarly, at the receiving end, the Fourier Transform effectively splits the time domain waveform into components that are carried by the unique, but related, frequencies and then demodulates each one to obtain the constellation point that was transmitted.

Whenever data is transmitted, it encounters multiple sources of interference and even data transmitted using advanced coding techniques such as OFDM and DMT are not immune. Real-world effects such as multipath delays and inter-carrier crosstalk cause noise to appear on the communications system, hence, reducing overall system performance. Multipath delays occur when wireless signals are reflected off objects (such as buildings and walls) and arrive at different times at the destination while inter-carrier crosstalk occurs when signals from a second transmission line are induced onto a first transmission line and interfere with signals being transmitted on the first transmission that is lying adjacent to the second transmission line.

Multipath delays within a single time domain symbol do not present a significant problem to the multi-carrier communications system, but when a delayed signal from one symbol appears on another symbol, discontinuities are introduced into the signal stream. This phenomenon is known as inter-symbol interference (ISI). The discontinuities can introduce errors into the signal stream, which in turn results in a reduction of the overall data transfer rate of the communications system.

In an attempt to combat ISI, guard bands are inserted periodically within the signal stream. The guard bands contain repeated data, unused data, or a specified signal sequence that is inserted into the signal stream to help mitigate the effects of ISI. The guard bands themselves can be a significant portion of the overall signal stream. In the IEEE 802.11a technical standard, guard bands account for 20% of the total signal stream. In a communications system such as asymmetric digital subscriber line (ADSL), the guard band accounts for only 6% of the total signal stream. This is because ADSL uses twisted-pairs of copper wire to transmit its signal and therefore is not subject to multipath delays.

The generation of the guard bands that contain repeated data uses a relatively simple procedure known as cyclic extension, wherein after the data stream is partitioned in to units of appropriate size for transmission purposes, 25% of the information at one end of the unit is replicated at the other end. The actual percentage replicated for guard band purposes depends upon the communications system in question, the IEEE 802.11a technical standard specifies 25%. For example, the modem takes a portion of the data stream, where the size of the portion can vary depending on the technical standard used, and replicates a percentage of the data at one end of the portion and places that percentage at the other end of the portion.

However, to complicate matters, when the communications system is powered up or is reset, the modems must undergo what is known as a training period. The training period is used to allow the modems to adjust hardware and functional units to meet current operating conditions. The IEEE 802.11a technical standard specifies two training sequences that are to be used during the training period, a short sequence and a long sequence. The short and the long description for the training sequences are in reference to the periodicity of the training sequences. The IEEE

## EP 1 292 080 B1

802.11a technical standard also requires that the short sequence and long sequences should be cyclically extended in a different manner to the extension applied to standard data transmission.

One solution used in the generation of training sequences that is currently used in a large number of communications systems is to store the training sequences on chip (in a memory) and then simply inject them into the communications system when they are needed. This is an inefficient solution because the training sequences need to be stored in a memory. By storing the sequences in a memory, the overall hardware requirements for the communications system is increased and hence will result in larger integrated circuits and a more expensive product.

Other solutions use compression and other encoding methods to reduce the storage requirements. However, if compression or other encoding methods are used, then specialized hardware is needed to decompress or decode the stored values. The specialized hardware would require additional area on the integrated circuit itself.

A need has therefore arisen for a solution to generating the required training sequences for a multi-carrier system without requiring that the sequences themselves be stored in a memory in the system.

European Patent Application EP-A-1 061 705 describes a synchronization preamble structure for an OFDM system in which an optimized sequence is mapped onto modulated subcarriers to result in a synchronization symbol in order to achieve high timing detection and frequency offset estimation accuracy and low envelope fluctuation.

European Patent Application EP-A-0 939 527 describes a method for mapping multicarrier signals into GSM time slots involving introducing a midamble between two OFEM-modulated symbols in a timeslot, to transmit pilot symbols for a channel estimation or to transmit symbols to be used for a correlation technique for synchronization.

PCT Patent Application WO 00 79712 A describes a technique for determining transmission mode and synchronization for a digital audio broadcast signal involving transmitting a plurality of control bits in each of a plurality of control frames, and receiving and processed to derive the control information

### SUMMARY OF THE INVENTION

The present invention provides a method, an apparatus and a modem as set forth in claims 1, 10 and 7 respectively. In one aspect, the present invention provides a method for generating vectors that are used to generate specified sequences, the method involves the partitioning of the specified sequence into partitions (or segments), selecting a partition one at a time, and determining a set of frequency domain constellations needed to generate the selected partition. The method is repeated for each partition in the sequence.

A preferred embodiment of the present invention has a principal advantage in that it permits the generation of training sequences for use during a training period without requiring the storage of the accual sequences themselves. The present invention therefore reduces the hardware required to store the training sequences.

A preferred embodiment of the present invention has an additional advantage in that it uses hardware already present in a communications system to generate the required training sequence.

A preferred embodiment of the present invention has yet another advantage in that it can be used to generate training sequences of any arbitrary length and cyclic extension without requiring any modifications.

A preferred embodiment of the present invention has yet another advantage in that it can be used to generate testing sequences of arbitrary length and cyclic extension for use in testing and evaluation purposes.

A preferred embodiment of the present invention has another advantage in that since it uses existing data generating hardware and software to generate the training sequences, the training sequence can make use of existing modem hardware such as equalizers to produce a compensated training sequence that is flat across a frequency band of interest and not attenuated by the transmitter hardware as an uncompensated training sequence that is simply extracted from memory would be.

### BRIEF DESCRIPTION OF THE DRAWINGS

The above features of the present invention will be more clearly understood from consideration of the following descriptions in connection with accompanying drawings in which:

Figure 1 is a diagram displaying a typical (prior art) configuration of a wireless local area network;
Figure 2 is a diagram displaying the structure of a signal stream according to the IEEE 802.11a technical standard;
Figure 3 is a diagram displaying an exemplary transmission unit of a signal stream according to the IEEE 802.11a technical standard;
Figure 4 is a block diagram displaying a data mode process for generating the exemplary transmission unit of a signal stream according to the IEEE 802.11a technical standard;
Figure 5 is a diagram displaying a simplistic representation of a short training sequence according to the IEEE 802.11a technical standard;
Figure 6 is a diagram displaying a simplistic representation of a long training sequence according to the IEEE

3

802.11a technical standard;

Figures 7a-b are diagrams displaying a frequency domain constellation and the same frequency domain constellation after it is rotated -45 degrees according to a preferred embodiment of the present invention;

Figures 8a-b are data plots displaying the real component of the frequency domain constellations displayed in Figures 7a-b after the frequency domain constellations are converted into time domain data by an inverse Fourier Transform according to a preferred embodiment of the present invention;

Figures 9a-b are data plots displaying the imaginary component of the frequency domain constellations displayed in Figures 7a-b after the frequency domain constellations are converted into time domain data by an inverse Fourier Transform according to a preferred embodiment of the present invention;

Figure 10a is a block diagram displaying a multi-carrier modem according to a preferred embodiment of the present invention;

Figure 10b is a block diagram displaying a processor of a multi-carrier modem in greater detail according to a preferred embodiment of the present invention;

Figure 11a-b is a diagram of a transmit path of a multi-carrier modem according to a preferred embodiment of the present invention; and

Figures 12a-b are diagrams displaying examples of the algorithm for generating cyclically extended signal streams displayed in Figure 11 according to a preferred embodiment of the present invention.

DETAILED DESCRIPTION OF ILLUSTRATIVE EMBODIMENTS

A preferred embodiment of the present invention discloses a method and apparatus for generating specific sequences of data. While the present implementation involves the use of the invention in the generation of training sequences for a wireless communications system, namely the IEEE 802.11a wireless local area network, the ideas presented by the invention have application in other types of networks, included wired networks. Therefore, the present invention should not be construed as being limited solely to the generation of data sequences for IEEE 802.11a wireless networks.

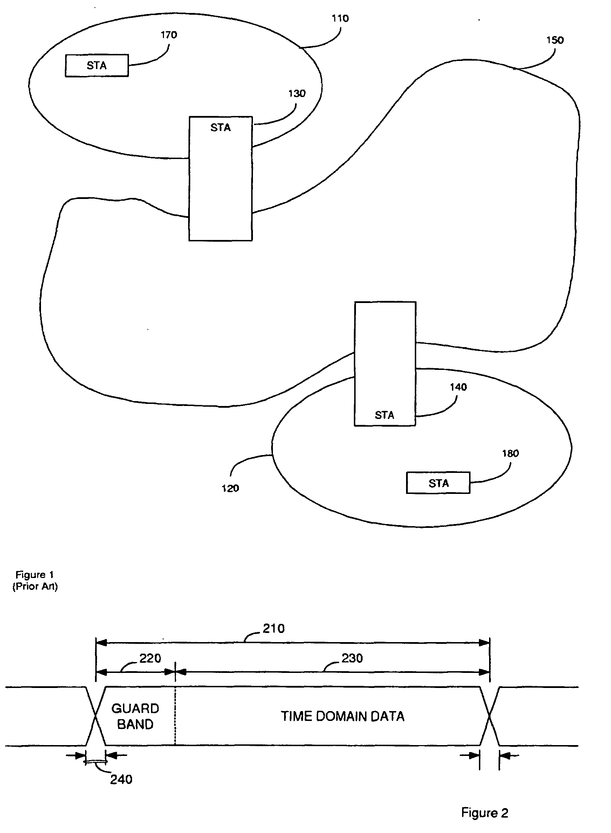

Referring now to Figure 1, a diagram (prior art) of a typical wireless local area network (LAN) installation according to the IEEE 802.11 technical standard, "ANSI/IEEE Std 802.11, 1999 Edition; Information technology - Telecommunications and information exchange between systems - Local and metropolitan area networks - Specific requirements. Part 11: Wireless LAN Medium Access Control (MAC) and Physical Layer (PHY) Specifications" which is incorporated herein by reference. A supplement to the IEEE 802.11 technical standard, "IEEE Std 802.11a-1999, Supplement to IEEE Standard for Information technology - Telecommunications and information exchange between systems - Local and metropolitan area networks - Specific requirements - Part 11: Wireless LAN Medium Access Control (MAC) and Physical Layer (PHY) specifications: High-speed Physical Layer in the 5 GHz Band," is also incorporated herein by reference. Figure 1 provides an illustration of the basic building blocks of an IEEE 802.11 network.

Figure 1 displays a first basic service set (BSS) 110 and a second BSS 120. A BSS is the basic building block of an IEEE 802.11 network and can be thought of as a coverage area within which member stations may participate in direct communications. A BSS is started, formed, and maintained by an access point (AP). BSS 110 corresponds to AP 130 and BSS 120 corresponds to AP 140. An AP is a station that is connected to a distribution system (DS) 150. A DS allows multiple BSSs to interconnect with one another and form an extended service set. The medium used in a DS may be the same as the medium used in the BSSs or it may be different, e.g., the medium used in the BSSs may be wireless radio frequency (RF) while a DS may use fiber optic. Internal to BSS 110 is an AP 130 and a wireless station (STA) 170 while internal to BSS 120 is an AP 140 and a STA 180. A BSS may contain more than two stations (e.g., a maximum of about 20 stations per BSS is typical today), but it will have one AP.

As shown in Figure 1, BSS 110 is connected to DS 150 via the access point 130 and the second access point 140 connects DS 150 to BSS 120. It should be noted that an access point also contains a wireless station and can be addressed like any other wireless station.

Stations within a BSS, for example, stations 130 and 170 in BSS 110, may communicate with one another without interfering with stations in other BSSs. However, the stations within a BSS cannot simply communicate whenever they wish; they must follow an established set of rules designed to minimize collisions and maximize performance.

Referring now to Figure 2, a diagram illustrates the structure of a time domain signal stream according to the IEEE 802.11a technical standard. The signal stream consists of a stream of individual transmission units (one of which is transmission unit 210). An individual transmission unit 210 may, in turn, be broken up into a guard band 220 and a time domain data field 230. The transmission unit 210 is separated from other transmission units by transition times, such as a transition time 240, where the signal that is transmitted typically consists of a combination of the previous symbol and the current symbol.

The time domain data field 230 contains a time domain representation of a portion of the data being transmitted. According to the IEEE 802.11a technical standard, the data being transmitted is initially encoded in the frequency domain. The conversion from the frequency domain to the time domain is performed using an inverse Fourier Transform, with an inverse Fast Fourier Transform being the preferred implementation of the inverse Fourier Transform.

A frequency domain data symbol, visually represented as a set of constellations represented by points with real and imaginary coordinates (frequency domain constellations), when converted into its time domain representation, becomes a stream of real and imaginary data values. According to the IEEE 802.11a technical standard there is no preferred size for the inverse Fourier Transform. A commonly used size for the inverse Fourier Transform is 64 points, however, inverse Fourier Transforms of size 128 and 256 points are also used in some systems. Inverse Fourier Transforms of size larger than 256 incur significant performance penalties resulting from the amount of computation time required to calculate the transform that any performance increase is outweighed by the greater computation requirements.

The guard band 220 is simply a portion from one end of the time domain data being transmitted by the transmission unit 210, copied and appended at the other end. According to the IEEE 802.11a technical standard, the guard band 220 occupies one-fifth (20%) of the transmission unit 210 while the time domain data occupies the remaining four-fifths (80%) of the transmission unit 210.

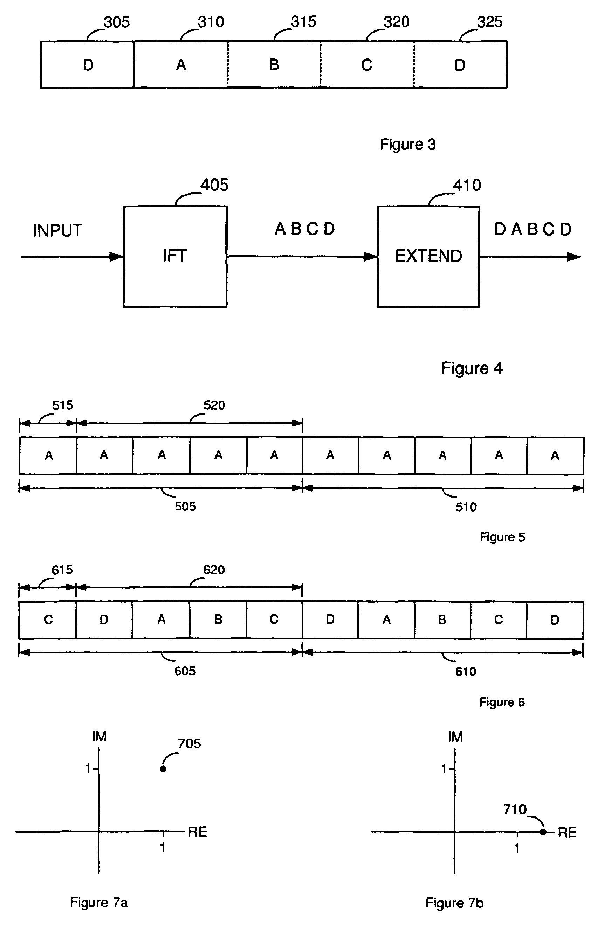

Referring now to Figure 3, a diagram illustrates a single transmission unit according to the IEEE 802.11a technical standard. Figure 3 displays a guard band 305 and four segments 310, 315, 320, and 325 of time domain data. Each of four segments and the guard band 305 are labeled with a letter. The letter is a representation of the time domain data contained therein. The letter may represent any amount of time domain data. For example, a single letter may represent one time domain data value or it may represent 64 (or more) time domain data values. The use of letters permits a simple and clean method to denote and discuss the data being transmitted. Segments represented by identical letters contain the same time domain data while segments with different letters contain different data. Figure 3 illustrates that the guard band 305 contains the same data as the fourth segment 325.

Referring now to Figure 4, a block diagram illustrates a data mode process for generating an exemplary extended transmission unit of a signal stream according to the IEEE 802.11a technical standard. The generation process begins with an input stream being provided to an inverse Fourier Transform (IFT) unit 405. The input stream is made up of frequency domain symbols, generated by a symbol generator (or a processor) (neither are shown in Figure 4). The IFT unit 405 performs an inverse Fourier Transform on the frequency domain symbols, converting them into their time domain representation. The output of the IFT unit 405 is a stream of numerical values, with numbers being real numbers, imaginary numbers, or a combination of both. Figure 4 displays the output of the IFT unit 405 as a sequence of letters, "A B C D". Each letter may represent a single numerical value or a sequence of multiple numerical values, with each letter representing the same number of numerical values.

The output of the IFT unit 405 then becomes the input of an extend unit 410. The extend unit 410 performs the cyclic extension operation discussed previously. The extend unit 410 simply duplicates a portion of the data at the beginning of the input stream and places it at the end of the input stream. Figure 4 displays that the input stream "A B C D" has been extended by duplicating the "D" and placing at the end of the input stream. The extend unit 410 produces at its output a sequence of letters, "D A B C D".

Training periods are vital to the proper operation of a modem. Because operating conditions change, especially for communications systems using wireless transmissions, training periods are crucial. The training periods permit the modems to adjust hardware and software to meet the current operating conditions. During the training period, a modem on one end of the transmission medium transmits a sequence(s) of symbols that is received by another modem located at the other end of the transmission medium. The receiving modem knows what the sending modem sent and by comparing the received signals with the sent signals, the receiving modem is able to adjust its hardware and software to make the received signals match the sent signals as perfectly as possible. The process is often reversed with the two modems exchanging roles so that both modems may be properly adjusted.

According to the IEEE 802.11a technical standards, two sequences of symbols are used for training purposes. A first sequence, referred to as a short sequence for its short periodicity, is transmitted first and is then followed by a second sequence, referred to as a long sequence.

Referring now to Figure 5, a diagram illustrates a symbolic representation of the short training sequence according to the IEEE 802.11a technical standard. The short sequence may be represented as a sequence of letters, "A A A A A A A A A A". Wherein each "A" represents a sequence of at least 16 complex time domain values and each "A" contains the same sequence of complex time domain values. The entire sequence lasts for approximately 8 microseconds when transmitted. Figure 5 displays the two transmission units 505 and 510 that comprises the short training sequence. The structure of a transmission unit as discussed earlier may be overlaid onto the transmission units displayed in Figure 5.

Since each transmission unit can be broken up into five segments and there are five "A's" in each transmission unit, each segment may be represented with a single "A". This being the case, one segment 515 may be viewed as a guard band and the remaining segments 520 may be viewed as the time domain data field.

Referring now to Figure 6, a diagram illustrates a simple representation of a long training sequence according to the IEEE 802.11a technical standard. Figure 6 displays the two transmission units 605 and 610 that comprises the long training sequence. Each transmission unit may be broken up into five segments and each segment is represented by a letter, with each letter representing at least 16 complex time domain values. Segments represented by different letters contain different time domain values, while segments represented by the same letters contain identical time domain values. Each transmission unit has a guard band that is a copy of the first segment in the transmission unit.

Referring now to Figures 7a-b, diagrams illustrate a single frequency domain constellation and the same frequency domain constellation after it is rotated -45 degrees according to a preferred embodiment of the present invention. A vertical axis (IM) represents the imaginary number scale, while a horizontal axis (RE) represents the real number scale. Figure 7a displays a frequency domain constellation containing a single data point 705 located at coordinates (1, 1j), where j represents the imaginary number, $\sqrt{-1}$. Figure 7b displays a frequency domain constellation that also contains a single data point 710. The frequency domain constellation in Figure 7b is the frequency domain constellation displayed in Figure 7a after it has been rotated -45 degrees. The data point 705 (Figure 7a) is now data point 710 and is located at coordinates ($\sqrt{2}$, 0j).

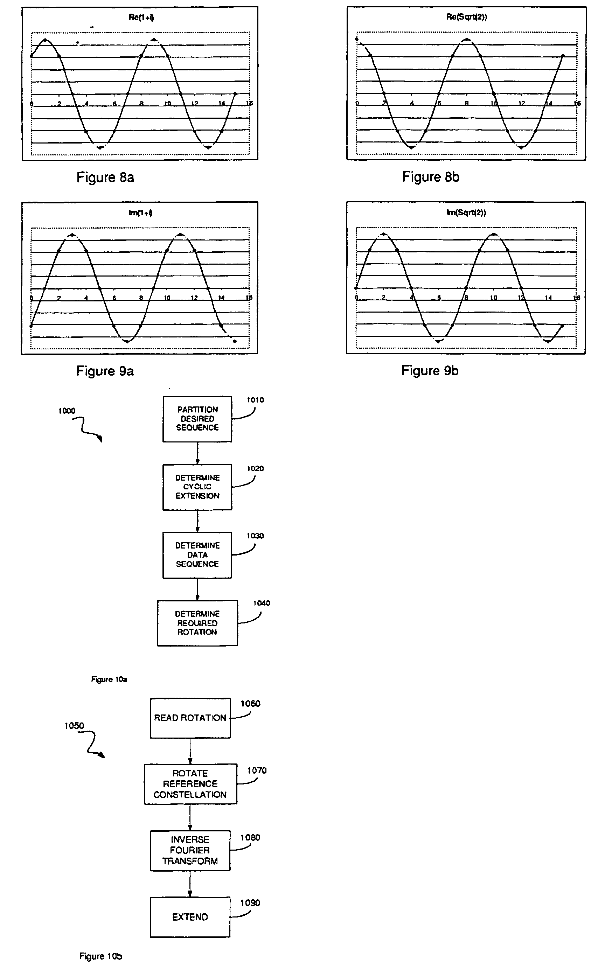

Referring now to Figures 8a-b, data plots illustrate the real component of the frequency domain constellations displayed in Figures 7a-b after the frequency domain constellations are converted into time domain data by an inverse Fourier Transform according to a preferred embodiment of the present invention. Figure 8a displays the real components of the time domain data resulting from an inverse Fourier Transform of the frequency domain constellation displayed in Figure 7a, while Figure 8b displays the real components of the time domain data resulting from an inverse Fourier Transform of the frequency domain constellation displayed in Figure 7b.

Table 1 displays the actual numerical values of the two data plots. Column 1 displays the position of the numerical value in the data stream, column 2 displays the values corresponding to the data plot shown in Figure 8a, column 3 displays an alphabet letter representation for each unique number displayed in column 2, column 4 displays the values corresponding to the data plot shown in Figure 8b, and column 5 displays an alphabet letter representation for each unique number displayed in column 4.

Table 1

| Value Number | RE (Figure 8a) | Letter Rep | RE (Figure 8b) | Letter Rep |
|---|---|---|---|---|
| 0 | 0.0156 | A | 0.0221 | B |
| 1 | 0.0221 | B | 0.0156 | A |
| 2 | 0.0156 | A | 0 | C |
| 3 | 0 | C | -0.0156 | D |
| 4 | -0.0156 | D | -0.0221 | E |
| 5 | -0.0221 | E | -0.0156 | D |
| 6 | -0.0156 | D | 0 | C |
| 7 | 0 | C | 0.0156 | A |
| 8 | 0.0156 | A | 0.0221 | B |
| 9 | 0.0221 | B | 0.0156 | A |
| 10 | 0.0156 | A | 0 | C |
| 11 | 0 | C | -0.0156 | D |
| 12 | -0.0156 | D | -0.0221 | E |
| 13 | -0.0221 | E | -0.0156 | D |
| 14 | -0.0156 | D | 0 | C |
| 15 | 0 | C | 0.0156 | A |

Note that the sequence of numerical values for the data plot displayed in Figure 8b is identical to the sequence of numerical values for the data plot displayed in Figure 8a, with the exception that it has been shifted. For example, value number 8 for Figure 8a is 0.0156 is value number 7 for Figure 8b. A value number N for Figure 8a is equivalent to value number (N - 1) modulo 16 for Figure 8b, where modulo is the remainder from an integer division operation. Therefore, a rotation of the frequency domain constellation is equivalent to a circular shift of the time domain data stream corresponding to the frequency domain constellation, with the amount (and direction) of circular shift being dependent on the amount (and direction) of rotation.

Referring now to Figures 9a-b, data plots illustrate the imaginary component of the frequency domain constellations displayed in Figures 7a-b after the frequency domain constellations are converted into time domain data by an inverse Fourier Transform according to a preferred embodiment of the present invention. Figure 9a displays the imaginary components of the time domain data resulting from an inverse Fourier Transform of the frequency domain constellation displayed in Figure 7a, while Figure 9b displays the imaginary components of the time domain data resulting from an inverse Fourier Transform of the frequency domain constellation displayed in Figure 7b.

Table 2 displays the actual numerical values of the two data plots. Column 1 displays the position of the numerical value in the data stream, column 2 displays the values corresponding to the data plot shown in Figure 9a, column 3 displays an alphabet letter representation for each unique number displayed in column 2, column 4 displays the values corresponding to the data plot shown in Figure 9b, and column 5 displays an alphabet letter representation for each unique number displayed in column 4.

Table 2

| Value Number | IM (Figure 9a) | Lette r Rep | IM (Figure 9b) | Lette r Rep |
|---|---|---|---|---|
| 0 | -0.0156 | M | 0 | N |
| 1 | 0 | N | 0.0156 | O |
| 2 | 0.0156 | O | 0.0221 | P |
| 3 | 0.0221 | P | 0.0156 | O |
| 4 | 0.0156 | O | 0 | N |
| 5 | 0 | N | -0.0156 | M |
| 6 | -0.0156 | M | -0.0221 | Q |
| 7 | -0.0221 | Q | -0.0156 | M |
| 8 | -0.0156 | M | 0 | N |
| 9 | 0 | N | 0.0156 | O |
| 10 | 0.0156 | O | 0.0221 | P |
| 11 | 0.0221 | P | 0.0156 | O |
| 12 | 0.0156 | O | 0 | N |
| 13 | 0 | N | -0.0156 | M |
| 14 | -0.0156 | M | -0.0221 | Q |
| 15 | -0.0221 | Q | -0.0156 | M |

Table 2 shows that the correspondence between a rotation in the frequency domain and a circular shift in the time domain holds true for both the real and imaginary components of the time domain data stream.

The above tables show the correspondence between a rotation in the frequency domain and a circular shift in the time domain for a single frequency domain constellation. However, due to the linearity of the inverse Fourier Transform, when several frequency domain constellations (each with a unique frequency) are applied to the input, this relationship between rotation in the frequency domain and shifting in the time domain is preserved.

According to a preferred embodiment of the present invention, since the desired sequences (for example, the short and long training sequences) are known prior to use, the generation of the desired sequence can be performed in two separate steps. A first step involves calculating the rotations and shifts needed to generate the desired sequences and then storing the calculated values. A second step involves the actual generation of the desired sequences using the calculated values.

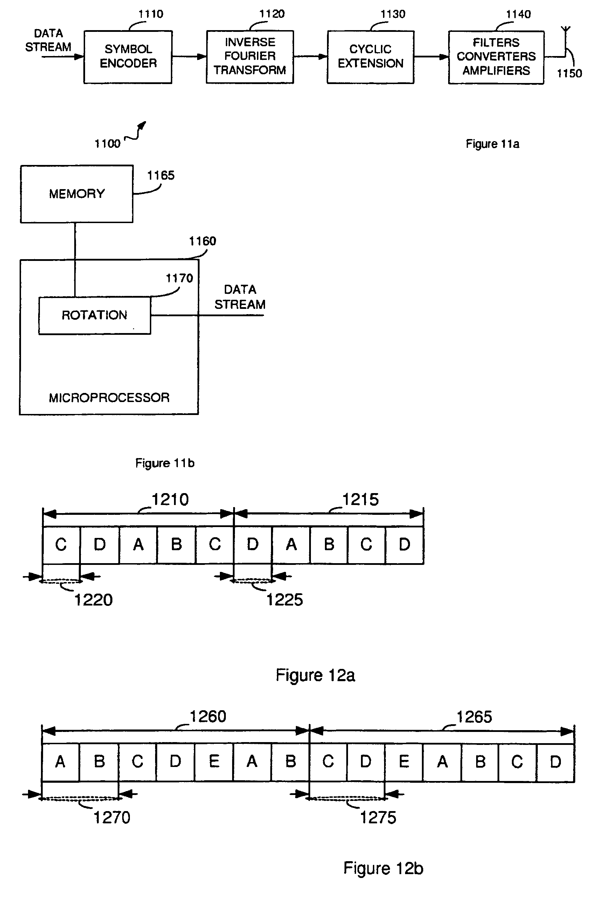

For the purposes of discussion of Figures 10a-b, the communications system is an IEEE 802.11a wireless local area network (WLAN) that uses an inverse Fast Fourier Transform (IFFT) of size 256 points, the guard band is one fourth the size of the IFFT or 64. The particular size of the IFFT was chosen based on engineering decisions. Smaller and larger IFFTs may be used without requiring modifications to the present invention in any way. The size of the guard band however, is fixed by the IEEE 802.11a technical standard at one-fourth the size of the IFFT. Therefore, if an IFFT of size 128 was chosen, then the guard band must be 32. If an IFFT of size 64 was chosen, then the guard band must be 16.

Referring now to Figure 10a, a diagram illustrates an algorithm 1000 for calculating the rotations and shifts needed to generate the desired sequences according to a preferred embodiment of the present invention. According to a preferred embodiment of the present invention, the algorithm 1000 executes only when there is a new sequence to process. In other alternative embodiments of the present invention, the multi-carrier modem does not even have to execute the algorithm 1000 due to the fact that the required information for generating the sequences have previously been calculated and stored in a memory in the multi-carrier modem.

When the algorithm 1000 is executed, the algorithm 1000 is provided with the desired transmission sequence, preferably in its time domain representation. The algorithm 1000 begins by partitioning the desired transmission sequence into properly sized transmission units (block 1010). It should be noted that the desired transmission sequence should be periodic, an integer multiple of the period of the desired transmission sequence, and should be equal in size to the time domain data field of the transmission unit. For an IEEE 802.11a WLAN using an IFFT of size 256 and a 64-point guard band, the transmission units are 320 points long, hence the desired transmission sequence is partitioned into 320-point transmission units. The algorithm 1000 then determines the amount of the cyclic extension. For an IEEE 802.11a WLAN with a 256-point IFFT, the cyclic extension is 64 points, or one-fourth of the IFFT size.

After determining the amount of the cyclic extension, the algorithm 1000 determines the amount of shifting required to produce the sequence designated as the time domain data field from a reference periodic sequence (block 1030). The reference periodic sequence is a stored periodic sequence from which the other periodic sequences in the desired transmission sequence are generated. If the sequence in the time domain data field is represented by "C D A B" and the reference periodic sequence was represented by "A B C D", then the algorithm 1100 would determine that the original periodic sequence would need to be shifted by two letters to obtain the sequence in the time domain data field. Once again, each letter in the exemplary sequences above may represent a sequence of values.

With the amount of shifting determined (block 1130), the algorithm 1100 is able to calculate the amount of rotation required on each reference frequency domain constellation to produce the required shift. The reference frequency domain constellations are the constellations that correspond to the reference periodic sequence. If an inverse Fourier Transform is performed on the reference frequency domain constellations, then the reference periodic sequence is produced. The amount of rotation required for each constellation to produce the required shift is expressible by the expression:

$$\text{rotation} = 360 * S/N * M \text{ degrees}$$

where $S$ is the number of data values in the desired shift, $N$ is the number of data values in the periodic sequence and $M$ is the multiple of the fundamental frequency with which the particular constellation is to be modulated. In the four-letter sequence example above, the amount of rotation required to shift the sequence by two letters is $360 * 2/4 * M = 180 * M$ degrees. Therefore, for constellations modulated by even multiples ($M$ even) of the fundamental frequency the rotation is 180 degrees and for constellations modulated by odd multiples ($M$ odd) of the fundamental frequency the rotation is 0 degrees. According to a preferred embodiment of the present invention, the rotation is calculated for the case where $M = 1$.

If an exemplary multi-carrier communications system has four active carrier frequencies, then there would be four reference frequency domain constellations for the reference time domain sequence. The rotation vector would then be applied to each of the four reference frequency domain constellation, with the rotation being applied to each reference frequency domain constellation being:

| Constellation Number | Rotation Vector (degrees) |
|---|---|
| 1 | 360 * S/N * 1 |
| 2 | 360 * S/N * 2 |
| 3 | 360 * S/N * 3 |
| 4 | 360 * S/N * 4 |

After calculating the requisite rotation, the algorithm 1000 stores the rotation in a memory for later use in the generation of the desired periodic sequence. The algorithm 1000 repeats until it has calculated and stored the rotations vectors needed to generate the entire desired periodic sequence.

According to another preferred embodiment of the present invention, the algorithm 1000 comprises an additional step of actually performing the rotations needed and then storing the rotated constellations in memory. The additional step of performing the rotation has an advantage of saving computation time during the actual generation of the desired transmission sequence. However, a person of reasonable skill in the art of the present invention should realize that this step is an extension of the present invention.

According to yet another preferred embodiment of the present invention, the desired transmission sequence may be presented to the algorithm 1000 as a sequence of frequency domain data. If this were the case, then an algorithm to calculate the required rotations would partition the frequency domain sequence and compare the constellations with the reference frequency domain constellations and calculate the needed rotation vectors based on the reference frequency domain constellations.

Referring now to Figure 10b, a diagram illustrates an algorithm 1050 for generating the desired transmission sequence from stored rotation vectors according to a preferred embodiment of the present invention. According to a preferred embodiment of the present invention, the algorithm 1050 is executed whenever the communications system wishes to transmit a desired transmission sequence. Examples of such instances would be during a training period or during a testing period or whenever the communications system is required to transmit a prespecified sequence.

The algorithm 1050 begins by reading from a memory (or some other storage location) a rotation vector (block 1060). The rotation vector corresponds to a rotation of the reference frequency domain constellations required to generate a portion of the desired transmission sequence. The algorithm 1050 then performs the rotation as specified by the rotation vector (block 1070) for each of the reference frequency domain constellations.

After rotating the reference frequency domain constellations, the algorithm 1050 performs an inverse Fourier Transform on the rotated frequency domain constellations (block 1080). The inverse Fourier Transform converts the rotated frequency domain constellations into their time domain representation. The time domain representation is then extended (block 1090). The output of the extension is a portion of the desired transmission sequence. The algorithm 1050 repeats until it has completed the generation of the desired transmission sequence.

According to another preferred embodiment of the present invention, a portion of the computation required to generate the desired transmission sequences may be saved if the actual rotated frequency domain constellations were stored rather than the rotation vectors. However, a person of reasonable skill in the art of the present invention should realize that this step is an extension of the present invention.

Referring now to Figure 11a, a block diagram illustrates a transmit path 1100 of a multi-carrier modem according to a preferred embodiment of the present invention. A typical modem has two data paths, a transmit path and a receive path. The transmit path is used to process outgoing data while the receive path is used to process incoming data. According to a preferred embodiment of the present invention, the receive path of the multi-carrier modem is essentially identical to the receive path of other multi-carrier modems.

The transmit path 1100, however, is necessarily different to support the generation of the training sequences. For example, a memory (if one exists) is much smaller since it is no longer dedicated to the storage of the actual values in the training sequences, as there would be in a typical multi-carrier modem. In existing methods used for generating training sequences, an entire period of the training sequence would need to be stored in memory. When the training sequences are needed, then they can be read from the memory and transmitted. Some methods use compression and other encoding techniques to reduce the storage requirements. However, if compression or other encoding methods are used, then specialized hardware and/or software is needed to decompress or decode the stored values. Additionally, if the actual data values were stored in the memory, then the sequence generation would still require different generation hardware due to the cyclic extension performed by the existing transmit path hardware.

A data stream is provided to the transmit path 1100 by a connection to a device (not shown) that is connected to the modem. Alternatively, the data stream is provided by a microprocessor (not shown) or a microcontroller (not shown) within the modem. The data stream is input into a symbol encoder 1110. The symbol encoder 1110 takes the data stream and performs a mapping operation that maps the data stream into the various frequency subcarriers of the multi-carrier system. The output of the symbol encoder 1110 is known as a frequency domain data symbol. The actual mapping operation performed by the symbol encoder 1110 is beyond the scope of this discussion.

The symbol encoder 1110 operates in the frequency domain since the mapping operation is simpler to perform in the frequency domain due to the fact that the multi-carrier system operates with multiple carrier frequencies. The frequency domain data symbol is then input into an inverse Fourier Transform 1120. According to a preferred embodiment of the present invention, the inverse Fourier Transform is implemented using an inverse Fast Fourier Transform algorithm. There are other algorithms for implementing an inverse Fourier Transform and any of them may be used. The inverse Fourier Transform 1120 converts the frequency domain data symbol into a time domain data symbol that is then suitable for transmission.

After the conversion into a time domain symbol, the data is then cyclically extended in a cyclic extension unit 1130. As discussed previously, the cyclic extension unit simply duplicates some of the data at the beginning of the data and places it at the end, with the duplicated portion becoming the data stream's guard band. According to the IEEE 802.11a technical standard, the cyclic extension unit 1130 extends the data stream by 25%. However, the actual extension amount is variable and can be changed depending on application. The extension amount may vary from zero percent upwards, with no practical limit except one determined by the designer of the modem. An upper limit on the amount of the extension is determined by the environment in which the communications system is operating and the desired performance of the communications system.

After extension, the data stream is ready to receive final manipulation before being transmitted. The data stream enters a filtering-converting-amplifying unit 1140. In this unit 1140, the data stream receives final filtering to ensure that only the desired signal is being transmitted, it is converted into an analog signal by a digital-to-analog converter, the output of which is possibly filtered again and is amplified to a signal level that is suitable for transmission by an antenna 1150.

Referring now to Figure 11b, a block diagram of a microprocessor 1160 with a memory 1165 that is capable of providing the data stream provided to the transmit path 1100 displayed in Figure 11a above according to a preferred embodiment of the present invention. Alternatively, the microprocessor may be replaced with a microcontroller or some other device that is connected to the modem. The microprocessor 1160 and the memory 1165 are displayed in Figure 11b as being separate entities. However, it is possible for the memory to be inside the microprocessor.

Internal to the microprocessor is a rotation unit 1170. The rotation unit 1170 is coupled to the memory 1165 through a data bus that is used to move data in and out of the microprocessor 1160. The rotation unit 1170 rotates the reference frequency domain constellations in accordance to a rotation vector that is read from the memory 1165 by the microprocessor 1160. The output of the rotation unit 1170 is provided to the symbol encoder 1110 of the transmit path 1100 displayed in Figure 11a.

According to another preferred embodiment of the present invention, the symbol encoder 1110, inverse Fourier Transform 1120, and the cyclic extension unit 1130 are also internal to the microprocessor 1160. Additionally, portions of the filter, converter, and amplification unit 1140 are also internal to the microprocessor 1160. The portions include any digital signal processing and digital filtering operations. These functional units may be implemented as functional blocks within the microprocessor 1160 or they may be software functions executing within the microprocessor 1160.

Referring now to Figures 12a-b, diagrams illustrate examples of the operation of the algorithms displayed in Figure 10a for calculating shifts and rotation vectors according to a preferred embodiment of the present invention. Figure 12a displays a sequence that is to be transmitted, and the sequence is represented by a sequence of letters "C D A B C D A B C D". Note that the sequence itself may extend for more letters, but only the first ten letters are displayed. The sequence is periodic with a period of four characters, "C D A B". For this example, the communications system transmits data in five letter transmission units with one of the letters being a guard band. The ratio of guard band to time domain data field in the system in this example is similar to an IEEE 802.11a compliant communications system. Figure 12a overlays the transmission unit structure over the sequence of letters.

A first transmission unit 1210 encompasses the letters "C D A B C", with a first "C" representing a guard band 1220. Note that the remaining four letters ("D A B C") in the transmission unit 1210 corresponds to the time domain data field. Also note that the remaining four letters ("D A B C") is the periodic sequence "C D A B" after it has been circularly shifted one letter to the left. Reviewing the results displayed in Figures 7a-b, 8a-b, and 9a-b, it is evident that by shifting the reference frequency domain constellations corresponding to the periodic sequence "C D A B" by -90 * $M$ degrees, the resulting rotated frequency domain constellations would correspond to a periodic sequence "D A B C".

A second transmission unit 1215 encompasses the letters "D A B C D", with a first "D" being a guard band 1225. Notice that the remaining four letters ("A B C D") is the original periodic sequence "C D A B" after it has been circularly shifted two letters to the left. This is accomplished by rotating the reference frequency domain constellations by -180 * $M$ degrees.

Figure 12b displays a sequence that is to be transmitted, and the sequence is represented by a sequence of letters "A B C D E A B C D E A B C D". Note that the sequence itself may extend for more letters, but only the first fourteen letters are displayed. The sequence is periodic with a period of five characters, "A B C D E". For this example, the communications system transmits data in seven letter transmission units with two of the letters being a guard band.

A first transmission unit 1260 encompasses the letters "A B C D E A B", with a first "A B" being a guard band 1270. Notice that the remaining five letters ("C D E A B") is the original periodic sequence "A B C D E" after it has been circularly shifted two letters to the left. This is accomplished by rotating the reference frequency domain constellations by -144 * $M$ degrees, or -72 * $M$ degrees for each shifted letter.

A second transmission unit 1265 encompasses the letters "C D E A B C D", with a first "C D" being a guard band 1275. Notice that the remaining five letters ("E A B C D") is the original periodic sequence "A B C D E" after it has been circularly shifted one letter to the right. This is accomplished by rotating the reference frequency domain constellations by +72 * $M$ degrees. Note that the rotation required in this example was a positive (+) 72 * $M$ degrees. This sign change is required because the circular shift was in the rightward direction and the circular shift in the leftward direction had previously been defined as a negative degree change.

Because the shifting discussed here is circular, meaning that the letters that are shifted out one end of the sequence is brought about to the other end, the shifting may occur in either direction. If there are $N$ letters in the periodic sequence, then a shift of 2 in the rightward direction is equivalent to a shift of $N$ - 2 in the leftward direction. The same is true for rotating the frequency domain constellation, where a rotation of $R$ degrees is equivalent to a rotation of -(360 - $R$) degrees.

A general expression may be derived for the relationship between the rotation in the frequency domain and the shifting in the time domain. Let the $N$ point periodic input be represented by the sequence $(x_0\ x_1\ x_2\ ...\ x_m\ ...\ x_{N-1})$ and the output of the inverse Fourier Transform unit 405 (Figure 4) be represented by the sequence $(X_0\ X_1\ X_2\ ...\ X_m\ ...\ X_{N-1})$. Then, if $(x_0\ x_1 e^{-j2\pi S/N}\ x_2 e^{-j2\pi 2S/N}\ ...\ x_m e^{-j2\pi mS/N}\ ...\ x_{N-1} e^{-j2\pi t(N-1)S/N})$, where $S$ is the desired shift amount and j represents the imaginary number, $\sqrt{-1}$, represents the input sequence then the output of the inverse Fourier Transform unit 405 is represented by $(X_{0-S}\ X_{1-S}\ X_{2-S}\ ...\ X_{m-S}\ ...\ X_{N-1-S})$, where the subscripts are modulo $N$.

Another application for the present invention is the generation of periodic sequences for testing purposes. For example, during regulatory testing (which is required for governmental approval of electronic products prior to sale in a nation), it is normal to require a device under test to generate a specific output sequence. From this output sequence, device characteristics are measured and approval is granted or not granted based on the measured characteristics. Other uses of test sequences may be for functional testing during manufacture, product performance testing during performance evaluation, etc.

A typical test sequence may be of the form "U V W X U V W X U V W X ..." and if the communications system is an IEEE 802.11a wireless LAN, then the sequence can be partitioned into five letter segments, such as "U V W X U", where a first "U" is the guard band and the "V W X U" sequence represents the time domain data field. Using the present invention, the periodic test sequence may be generated via rotations of the reference frequency domain constellations.

An advantage of a preferred embodiment of the present invention that should be mentioned is derived from the fact that it uses the actual hardware that is normally used to transmit the data sequences to generate and transmit the training and test sequences. Because of this fact, the training and test sequences can be readily equalized prior to being transmitted. Since real-world devices often suffer from non-linear attenuation as operating frequencies increase, a wide-band signal commonly suffers increased attenuation at its higher frequency components. The use of the same transmission hardware to transmit the training and test sequences permits the sequences to be equalized, i.e., the frequency response be flattened, as they are transmitted.

According to another preferred embodiment of the present invention, the value of the desired shift, S, can in fact be a fractional value. While the results of such a shift does not correspond to any desired time domain sequence when viewed as a single transmission unit, when viewed across multiple transmission units (or as the entire time domain sequence), the shift does indeed result in a continuous sequence that appears fine.

While this invention has been described with reference to illustrative embodiments, this description is not intended to be construed in a limiting sense. Various modifications and combinations of the illustrative embodiments, as well as other embodiments of the invention, will be apparent to persons skilled in the art upon reference to the description. It is therefore intended that the appended claims encompass any such modifications or embodiments.

**Claims**

1.   A method for generating vectors for use in generating data sequences comprising:

      (a) partitioning (1010) a periodic time domain sequence into a plurality of partitions;
      (b) selecting a partition; and
      (c) determining (1030) a set of at least one frequency domain constellations required to generate the selected partition; **characterized in that** it further comprises:
      (d) calculating a shift required to transform a reference time domain sequence into the selected partition;
      (e) calculating an offset vector based on the calculated shift; and
      (f) storing the offset vector.

2.   The method of claim 1, further comprising the step of (g) repeating steps (b)-(f) for each remaining partition.

3.   The method of claim 1 or claim 2, wherein the partition has a finite length, N, and wherein the calculating of the offset vector comprises the expression:

$$\text{offset vector} = 360 * S/N \text{ degrees}$$

where S is the calculated shift, and N is the length of the partition.

4.   The method of claim 1 or claim 2, wherein the partition has a finite length, N, and wherein the calculating of the offset vector comprises the expression:

$$\text{offset vector} = 360 * S/N * M \text{ degrees}$$

where S is the calculated shift, N is the length of the partition, and M is an integer value, corresponding to a multiple of a fundamental frequency with which each frequency domain constellation is modulated.

**5.** The method of any preceding claim, wherein the determining step further comprises:

  calculating a set of at least one frequency domain constellations required to generate the selected partition; and storing the set of at least one frequency domain constellations in a storage location.

**6.** The method of any preceding claim including the step of
  applying (1070) the offset vector to a set of at least one reference frequency domain constellations, producing the set of at least one frequency domain constellations.

**7.** A modem comprising:

  a memory;
  a symbol encoder coupled to the memory, to transform a data stream into a frequency domain data symbol;
  an inverse Fourier Transform unit coupled to the symbol encoder, to convert the frequency domain data symbol into a time domain data stream;
  a cyclic extension unit coupled to the inverse Fourier Transform unit, to generate an extension of the time domain data stream by copying a prespecified amount of the time domain data stream and appending the extension onto the time domain data stream; and
  a processor coupled to the memory, **characterized by**;
  the memory being adapted to store a rotation vector corresponding to a shift required to transform a reference time domain sequence into a predetermined partition of a periodic time domain sequence, and the processor comprising a rotation unit coupled to the memory, the rotation unit being adapted to apply the rotation vector to rotate a reference frequency domain data symbol by an amount specified by the rotation vector.

**8.** The modem of claim 7, wherein the memory contains the rotation vector.

**9.** The modem of claim 7 or claim 8, wherein there are a plurality of rotation vectors, and wherein the rotation vectors are precalculated and stored in the memory during the manufacture of the modem.

**10.** Apparatus comprising means adapted to implement each of the steps of the method as claimed in anyone of claims 1 to 6.

**Patentansprüche**

**1.** Verfahren zum Erzeugen von Vektoren für die Verwendung bei der Erzeugung von Datenfolgen, das umfasst:

  (a) Partitionieren (1010) einer periodischen Zeitdomänenfolge in mehrere Partitionen;

  (b) Auswählen einer Partition; und

  (c) Bestimmen (1030) einer Menge aus wenigstens einer Frequenzdomänen-Konstellation, die erforderlich ist, um die ausgewählte Partition zu erzeugen;
    **dadurch gekennzeichnet, dass** es ferner umfasst:

  (d) Berechnen einer Verschiebung, die erforderlich ist, um eine Referenz-Zeitdomänenfolge in die ausgewählte Partition zu transformieren;

  (e) Berechnen eines Offset-Vektors anhand der berechneten Verschiebung; und

  (f) Speichern des Offset-Vektors.

**2.** Verfahren nach Anspruch 1, das ferner den Schritt (g) umfasst, bei dem die Schritte (b)-(f) für jede verbleibende Partition wiederholt werden.

**3.** Verfahren nach Anspruch 1 oder Anspruch 2, bei dem die Partition eine endliche Länge N hat und bei dem das Berechnen des Offset-Vektors den folgenden Ausdruck umfasst:

$$\text{Offset-Vektor} = 360 * S/N \text{ Grad}$$

wobei S die berechnete Verschiebung ist und N die Länge der Partition ist.

**4.** Verfahren nach Anspruch 1 oder Anspruch 2, bei dem die Partition eine endliche Länge N besitzt und bei dem das Berechnen des Offset-Vektors den folgenden Ausdruck umfasst:

$$\text{Offset-Vektor} = 360 * S/N * M \text{ Grad}$$

wobei S die berechnete Verschiebung ist, N die Länge der Partition ist und M ein ganzzahliger Wert ist, der einem Vielfachen einer Grundfrequenz entspricht, mit der jede Frequenzdomänen-Konstellation moduliert wird.

**5.** Verfahren nach einem vorhergehenden Anspruch, bei dem der Bestimmungsschritt ferner umfasst:

Berechnen einer Menge aus wenigstens einer Frequenzdomänen-Konstellation, die erforderlich ist, um die ausgewählte Partition zu erzeugen; und

Speichern der Menge aus wenigstens einer Frequenzdomänen-Konstellation an einem Speicherplatz.

**6.** Verfahren nach einem vorhergehenden Anspruch, das den folgenden Schritt umfasst:

Anwenden (1070) des Offset-Vektors auf eine Menge aus wenigstens einer Referenz-Frequenzdomänen-Konstellation und Erzeugen der Menge aus wenigstens einer Frequenzdomänen-Konstellation.

**7.** Modem, das umfasst:

einen Speicher;

einen Symbolcodierer, der mit dem Speicher gekoppelt ist, um einen Datenstrom in ein Frequenzdomänen-Datensymbol zu transformieren;

eine Einheit für inverse Fourier-Transformation, die mit dem Symbolcodierer gekoppelt ist, um das Frequenzdomänen-Datensymbol in einen Zeitdomänen-Datenstrom umzusetzen;

eine Einheit für zyklische Erweiterung, die mit der Einheit für inverse Fourier-Transformation gekoppelt ist, um eine Erweiterung des Zeitdomänen-Datenstroms durch Kopieren einer im Voraus bestimmten Menge des Zeitdomänen-Datenstroms und durch Anfügen der Erweiterung an den Zeitdomänen-Datenstrom zu erzeugen; und

einen Prozessor, der mit dem Speicher gekoppelt ist, **dadurch gekennzeichnet, dass**:

der Speicher so beschaffen ist, dass er einen Rotationsvektor speichert, der einer Verschiebung entspricht, die erforderlich ist, um eine Referenz-Zeitdomänenfolge in eine vorgegebene Partition einer periodischen Zeitdomänenfolge zu transformieren, und der Prozessor eine Rotationseinheit, die mit dem Speicher gekoppelt ist, umfasst, wobei die Rotationseinheit so beschaffen ist, dass sie den Rotationsvektor anwendet, um das Referenz-Frequenzdomänen-Datensymbol um einen durch den Rotationsvektor bestimmten Betrag zu drehen.

**8.** Modem nach Anspruch 7, bei dem der Speicher den Rotationsvektor enthält.

9.  Modem nach Anspruch 7 oder Anspruch 8, in dem mehrere Rotationsvektoren vorhanden sind und in dem die Rotationsvektoren im Voraus berechnet und während der Herstellung des Modems im Speicher gespeichert werden.

10. Vorrichtung, die Mittel umfasst, die jeden der Schritte des Verfahrens nach einem der Ansprüche 1 bis 6 implementieren können.

**Revendications**

1.  Procédé pour la production de vecteurs destinés à être utilisés pour la production de séquences de données, consistant à :

    (a) diviser (1010) une séquence périodique dans le domaine temporel en une pluralité de partitions;
    (b) sélectionner une partition; et
    (c) déterminer (1030) un ensemble d'au moins un groupe dans le domaine de fréquences requis pour produire la partition sélectionnée;

    **caractérisé en ce qu'**il comporte en outre :

    (d) le calcul d'un décalage requis pour transformer une séquence de référence dans le domaine temporel en la partition sélectionnée;
    (e) le calcul d'un vecteur de décalage sur la base du décalage calculé; et
    (f) la mémorisation du vecteur de décalage.

2.  Procédé selon la revendication 1, comprenant en outre l'étape consistant à (g) répéter les étapes (b)-(f) pour chaque autre partition.

3.  Procédé selon la revendication 1 ou la revendication 2, selon lequel la partition possède une longueur finie N, et selon lequel le calcul du vecteur de décalage comprend l'expression :

    vecteur de décalage = 360 * S/N degrés

    S étant le décalage calculé et N la longueur de la partition.

4.  Procédé selon la revendication 1 ou la revendication 2, dans lequel la partition possède une longueur finie N et selon lequel le calcul du vecteur de décalage comprend l'expression :

    vecteur de décalage = 360 * S/N * M degrés

    S étant le décalage calculé, N la longueur de la partition et M une valeur entière, correspondant à un multiple d'une fréquence fondamentale avec laquelle chaque groupe dans le domaine des fréquences est modulé.

5.  Procédé selon l'une quelconque des revendications précédentes, selon lequel l'étape de détermination comprend en outre :

    le calcul d'un ensemble d'au moins l'un des groupes dans le domaine des fréquences requis pour générer la partition sélectionnée; et
    la mémorisation de l'ensemble d'au moins l'un des groupes dans le domaine des fréquences en un emplacement de mémoire.

6.  Procédé selon l'une quelconque des revendications précédentes, comprenant l'étape consistant à
    appliquer (1070) le vecteur de décalage à un ensemble d'au moins l'un des groupes de référence dans le domaine des fréquences en produisant l'ensemble d'au moins un groupe dans le domaine de fréquences.

7.  Modem comprenant :

une mémoire;

un codeur de symboles couplé à la mémoire, pour transformer un flux de données en un symbole de données dans le domaine des fréquences;

une unité de transformation de Fourier inverse couplée au codeur de symboles pour convertir le symbole de données dans le domaine des fréquences en un flux de données dans le domaine temporel;

une unité d'extension cyclique couplée à l'unité de transformation de Fourier inverse pour générer une extension du flux de données dans le domaine temporel par copiage d'une quantité préalablement spécifiée du flux de données dans le domaine temporel et ajout de l'extension au flux de données dans le domaine temporel; et

un processeur couplé à la mémoire;

**caractérisé en ce que** :

la mémoire est adaptée pour mémoriser un vecteur de rotation correspondant à un décalage requis pour transformer une séquence de référence dans le domaine temporel en une partition prédéterminée d'une séquence périodique dans le domaine temporel et que le processeur comprend une unité de rotation couplée à la mémoire, l'unité de rotation étant adaptée pour appliquer le vecteur de rotation de manière à faire tourner un symbole de données de référence dans le domaine des fréquences, d'une quantité spécifiée par le vecteur de rotation.

8. Modem selon la revendication 7, dans lequel la mémoire contient le vecteur de rotation.

9. Modem selon la revendication 7 ou la revendication 8, dans lequel il est prévu une pluralité de vecteurs de rotation, et dans lequel les vecteurs de rotation sont préalablement calculés et mémorisés dans la mémoire pendant la fabrication du modem.

10. Dispositif comprenant des moyens adaptés pour mettre en oeuvre chacune des étapes du procédé selon l'une quelconque des revendications 1 à 6.

Figure 1
(Prior Art)

Figure 2

16

| 305 | 310 | 315 | 320 | 325 |
|-----|-----|-----|-----|-----|
| D | A | B | C | D |

Figure 3

INPUT → **405** IFT → A B C D → **410** EXTEND → D A B C D →

Figure 4

| 515 | | | | | 520 | | | | |
|-----|---|---|---|---|-----|---|---|---|---|
| A | A | A | A | A | A | A | A | A | A |

505 | 510

Figure 5

| 615 | | | | | 620 | | | | |
|-----|---|---|---|---|-----|---|---|---|---|
| C | D | A | B | C | D | A | B | C | D |

605 | 610

Figure 6

IM
1 —
• 705

——————— RE
1

Figure 7a

IM
1 —

710
——————•— RE
1

Figure 7b

17

Figure 8a

Figure 8b

Figure 9a

Figure 9b

Figure 10a

Figure 10b

DATA STREAM →

1110
SYMBOL ENCODER →

1120
INVERSE FOURIER TRANSFORM →

1130
CYCLIC EXTENSION →

1140
FILTERS CONVERTERS AMPLIFIERS →

1150

1100

Figure 11a

1165
MEMORY

1160
MICROPROCESSOR

1170
ROTATION

DATA STREAM

Figure 11b

1210          1215

| C | D | A | B | C | D | A | B | C | D |

1220          1225

Figure 12a

1260                1265

| A | B | C | D | E | A | B | C | D | E | A | B | C | D |

1270          1275

Figure 12b